# FASCICULE DE BREVET EUROPEEN

(11) **EP 3 488 540 B1**
(45) Date de publication et mention de la délivrance du brevet: **26.02.2020**
(21) Numéro de dépôt: 17786966.6
(22) Date de dépôt: 28.09.2017
(51) Int. Cl.: H04B 10/118

(54) **SYSTEME COMBINE D'IMAGERIE ET DE COMMUNICATION PAR SIGNAUX LASER**
KOMBINIERTES BILDGEBUNGS- UND LASERKOMMUNIKATIONSSYSTEM
COMBINED IMAGING AND LASER COMMUNICATION SYSTEM

(30) Priorité: 21.10.2016 FR 1660213
(43) Date de publication de la demande: 29.05.2019
(73) Titulaire: Airbus Defence and Space SAS, 31402 Toulouse Cedex 4 (FR)
(72) Inventeur: SPERANDEI, Jean, 31400 Toulouse (FR); PLANCHE, Gilles, 31400 Toulouse (FR)
(74) Mandataire: Plasseraud IP
(86) Numéro de dépôt international: PCT/FR2017/052654
(87) Numéro de publication internationale: WO 2018/073507

(56) Documents cités:
- EP-A1- 2 388 646
- CA-A1- 2 908 237
- US-A1- 2004 021 852

## Description

La présente invention concerne un système combiné d'imagerie et de communication par signaux laser, un satellite porteur d'un tel système ainsi qu'un procédé de communication par signaux laser.

La communication par signaux laser entre un satellite qui est en orbite autour de la Terre et un récepteur de communication laser qui peut être situé sur Terre ou à bord d'un autre satellite est bien connue. Couramment, un terminal qui est dédié aux communications par signaux laser est embarqué sur le satellite. Un tel terminal comprend usuellement une source de rayonnement laser, un contrôleur de communication laser, une optique d'émission du rayonnement laser vers l'extérieur, un mécanisme de pointage grossier qui est désigné par CPA pour «coarse pointing assembly» en anglais, et un mécanisme de pointage fin qui est désigné par FPA pour «fine pointing assembly». L'optique d'émission est en général un télescope à au moins deux miroirs, comprenant un miroir primaire et un miroir secondaire. Les mécanismes de pointage grossier et fin permettent d'orienter et de maintenir en temps réel la direction d'émission du terminal conformément à une direction cible qui est déterminée pour pointer vers le récepteur de communication laser. Pour cela, la direction d'émission est estimée en temps réel sur la base d'une propagation de données d'orbitographie, ces données étant chargées périodiquement du sol vers le satellite, par exemple une fois à chaque révolution du satellite sur son orbite ou une fois par jour. Autrement dit, les coordonnées du satellite sont actualisées à des instants séparés, et la direction cible est ensuite calculée en fonction de coordonnées du récepteur de communication laser, et de la position ultérieure du satellite à partir de laquelle les signaux de transmission laser seront émis. Cette position du satellite lors de l'émission des signaux de transmission laser, puis la direction cible pour l'émission de ces signaux, sont calculées à partir de la dernière actualisation qui a été réalisée pour les coordonnées du satellite. Ces calculs sont effectués usuellement dans un référentiel inertiel, c'est-à-dire un référentiel qui est fixe par rapport à des étoiles lointaines.

De façon connue, le mécanisme de pointage grossier comprend un cardan à deux axes sur lequel est montée la partie optique du terminal de communication par signaux laser, ou bien sur lequel est monté un miroir de sortie de ce terminal. Un tel mécanisme de pointage grossier est donc constitué d'un support à deux axes de rotation, de deux moteurs et des contrôleurs nécessaires pour ceux-ci.

De façon connue aussi, le mécanisme de pointage fin comprend un petit miroir mobile, qui est disposé sur le trajet du rayonnement laser des signaux de transmission laser, entre une source de ce rayonnement laser et l'optique d'émission du rayonnement laser vers l'extérieur. Ce miroir mobile est disposé sur une portion de trajet des signaux de transmission laser dans le terminal, qui est commune aux voies d'émission et de réception pour stabiliser la ligne de visée du terminal. De cette façon, il est possible de s'affranchir des perturbations qui sont présentes sur la même ligne de visée. Pour cela, le mécanisme de pointage fin comprend aussi des actionneurs et un contrôleur supplémentaire pour orienter le miroir mobile.

De plus, et encore de façon connue, un terminal de communication par signaux laser qui est embarqué à bord d'un satellite comprend en outre un système d'acquisition et de suivi de cible, ou ATS pour «acquisition and tracking system» en anglais. Les fonctions d'un tel système d'acquisition et de suivi de cible sont de détecter initialement puis de suivre le récepteur distant de communication par signaux laser auquel sont transmis les signaux émis à partir du satellite. Un tel système comprend un détecteur d'image matriciel, et permet d'asservir au moins l'ajustement du mécanisme de pointage fin à une déviation qui apparaît entre la direction d'émission des signaux de transmission laser et une direction de réception de signaux laser qui sont émis par le récepteur distant.

Le document EP 1 635 485 indique que des améliorations ont été apportées aux systèmes de contrôle d'attitude et d'orbite des satellites, qui permettent de supprimer le mécanisme de pointage grossier des terminaux de communication par signaux laser embarqués sur les satellites. L'optique d'émission du rayonnement laser par le terminal est alors fixée rigidement sur un châssis du satellite, de sorte que l'axe optique de cette optique soit fixe par rapport au châssis. La direction d'émission des signaux de transmission laser par le terminal est alors ajustée conformément à la direction cible conjointement en orientant tout le satellite et en utilisant le mécanisme de pointage fin.

Par ailleurs, des satellites sont couramment utilisés pour des missions d'imagerie, lors desquelles des images de la surface de la Terre sont saisies par des instruments d'imagerie qui sont embarqués à bord de ces satellites, et dont la partie optique est constituée en général d'un télescope La communication par transmission de signaux laser est bien adaptée à la transmission des données d'images à un récepteur distant, qui peut être situé sur Terre ou à bord d'un autre satellite. En effet, elle permet une transmission de données à très haut débit avec une consommation d'énergie faible. Cependant la complexité et le coût des systèmes de communication optique, notamment à cause des mécanismes de pointage et des asservissements associés, limite l'utilisation de cette technologie.

Le document EP 2 388 646 décrit un système d'imagerie qui est adapté pour être embarqué à bord d'un satellite, et pour détecter des variations d'une ligne de visée en formant, en plus de l'image d'une zone cible qui est voulue, une image d'une source de rayonnement laser qui est éloignée du système. Les deux rayonnements, celui issu de la zone cible et celui issu de la source laser, sont réfléchis à l'intérieur d'un télescope du système selon un même ordre des miroirs primaire et secondaire.

A partir de cette situation, le but de l'invention consiste à réduire le nombre des composants d'un tel satellite qui contribuent à son poids, à son prix de revient et au coût de son lancement.

Pour atteindre l'un au moins de ces buts ou d'autres, un premier aspect de l'invention propose un système combiné d'imagerie et de communication par signaux laser, qui comprend :
- un télescope, comprenant au moins un miroir primaire et un miroir secondaire, et adapté pour former dans le plan focal de ce télescope, une image d'une scène qui est située dans une direction de pointage du télescope, par réflexion d'un rayonnement reçu en provenance de la scène au moins sur le miroir primaire puis sur le miroir secondaire ; et
- un capteur d'image, qui est disposé dans le plan focal du télescope et adapté pour saisir l'image de la scène ; et
- une source de rayonnement laser, qui est adaptée pour produire des signaux de transmission laser.

Selon l'invention, la source de rayonnement laser est agencée de sorte que le rayonnement laser qui constitue les signaux de transmission laser soit réfléchi au moins par le miroir secondaire puis par le miroir primaire pour être émis vers un récepteur de communication laser externe au système. Autrement dit, les miroirs primaire et secondaire du même télescope sont utilisés pour les deux fonctions d'imagerie et d'émission des signaux de transmission laser. Cette combinaison de fonctions permet d'éviter l'ajout d'un télescope supplémentaire qui soit spécialement dédié à la fonction d'émission des signaux de transmission laser, indépendamment d'un premier télescope dédié à la fonction d'imagerie.

De façon générale pour l'invention, le télescope peut comprendre en outre un miroir tertiaire et être adapté pour former dans le plan focal du télescope, l'image de la scène par réflexion du rayonnement qui est reçu en provenance de cette scène successivement sur le miroir primaire, puis le miroir secondaire, puis le miroir tertiaire. En particulier, le télescope peut être de type Korsch, tel qu'il est couramment utilisé pour la fonction d'imagerie des satellites d'observation de la Terre.

Dans de tels modes de réalisation de l'invention à miroirs primaire, secondaire et tertiaire, le système peut être agencé de sorte que le rayonnement laser qui constitue les signaux de transmission laser soit réfléchi par le miroir secondaire puis par le miroir primaire sans être réfléchi par le miroir tertiaire pour être émis vers le récepteur de communication laser externe au système. Pour cela, le rayonnement laser qui constitue les signaux de transmission laser peut être introduit dans un plan focal intermédiaire du télescope qui est effectif pour du rayonnement réfléchi par les miroirs primaire et secondaire à l'exclusion du miroir tertiaire.

Dans d'autres modes de réalisation de l'invention encore à miroirs primaire, secondaire et tertiaire, le système peut être agencé alternativement de sorte que le rayonnement laser qui constitue les signaux de transmission laser soit réfléchi successivement par le miroir tertiaire, puis par le miroir secondaire, puis par le miroir primaire pour être émis vers le récepteur de communication laser externe au système. Dans ce cas, le système peut être agencé en outre pour amener le rayonnement laser qui constitue les signaux de transmission laser à un endroit du plan focal qui est distant du capteur d'image. Par amener le rayonnement laser à un endroit déterminé, on entend tout moyen d'introduction et/ou de guidage du rayonnement laser depuis la source de ce rayonnement jusqu'à l'endroit déterminé. Cela comprend en particulier le placement de la source à cet endroit, notamment lorsque la source est de type diode laser, ou un guidage du rayonnement laser par fibre optique sur une partie au moins d'un trajet optique à partir de la source du rayonnement laser jusqu'à l'endroit déterminé, ou encore tout système optique possiblement à base d'au moins un miroir, lame semi-réfléchissante ou dioptre qui transfert le rayonnement laser de la source à l'endroit déterminé.

En variante, le système peut comprendre en outre un élément de duplication de plan focal qui est agencé pour créer une image du plan focal du télescope, appelée plan focal secondaire. Le système peut alors être agencé de sorte que le rayonnement laser qui constitue les signaux de transmission laser soit amené à un endroit du plan focal secondaire qui est superposé optiquement au capteur d'image par l'élément de duplication de plan focal. Le rayonnement laser des signaux de transmission laser, qui est produit par la source de rayonnement laser, est alors dirigé par l'élément de duplication de plan focal vers le miroir tertiaire, puis réfléchi successivement par ce miroir tertiaire, puis par le miroir secondaire, puis par le miroir primaire pour être émis vers le récepteur de communication laser externe au système. Dans de tels modes de réalisation de l'invention, l'élément de duplication de plan focal peut comprendre un miroir ou une lame dichroïque, qui est agencé(e) pour réfléchir l'un parmi le rayonnement laser des signaux de transmission laser et le rayonnement reçu en provenance de la scène, et transmettre sans réflexion par ce miroir ou cette lame dichroïque, l'autre parmi ces deux rayonnements.

Si nécessaire, le système peut comprendre en outre une voie de réception de signaux externes de communication laser. Une telle voie de réception peut comprendre un détecteur de réception et être agencée pour qu'un rayonnement des signaux externes de communication laser qui sont émis par le récepteur de communication laser externe au système, soit réfléchi par au moins le miroir primaire puis par le miroir secondaire avant d'atteindre le détecteur de réception. Ainsi, au moins les miroirs primaire et secondaire du télescope sont en plus partagés avec la voie de réception. Avantageusement, le système peut alors être agencé en outre de sorte que le rayonnement laser des signaux de transmission laser qui sont émis par ce système, et le rayonnement des signaux externes qui sont émis par le récepteur de communication laser externe au système, et qui atteint le détecteur de réception, suivent des chemins optiques qui sont identiques à l'intérieur du télescope en étant parcourus selon des sens de propagation qui sont opposés.

Un deuxième aspect de l'invention propose un satellite qui est destiné à être placé en orbite autour de la Terre, et qui comprend :
- un système combiné d'imagerie et de communication par signaux laser, qui est conforme au premier aspect de l'invention, et qui est fixé sur un châssis du satellite de sorte que la direction de pointage du télescope soit fixe par rapport au châssis ;
- des moyens d'orientation du satellite ; et
- un système de contrôle d'attitude et d'orbite, qui est adapté pour commander les moyens d'orientation du satellite afin d'amener une direction d'émission des signaux de transmission laser vers une direction cible, de sorte que le système combiné d'imagerie et de communication par signaux laser émette ensuite les signaux de transmission laser conformément à la direction cible.

Etant donné que la direction de pointage du télescope est fixe par rapport au châssis dans un tel satellite, celui-ci est dépourvu de mécanisme de pointage grossier. La direction de pointage du télescope pour la fonction d'imagerie est alors ajustée en n'utilisant que les moyens d'orientation du satellite. La direction d'émission des signaux de transmission laser peut aussi être ajustée en utilisant ces mêmes moyens d'orientation du satellite, mais possiblement en utilisant en plus, le cas échéant, un mécanisme de pointage fin qui peut être présent dans le système combiné d'imagerie et de communication par signaux laser, sur le chemin optique du rayonnement laser des signaux de transmission laser qui sont émis.

Selon une caractéristique supplémentaire de l'invention, le satellite comprend en outre :
- un équipement de géolocalisation, qui est adapté pour recevoir des signaux de géolocalisation, et pour calculer une position du satellite à partir des signaux de géolocalisation reçus ; et
- un module, qui est adapté pour calculer la direction cible en fonction de la position du satellite telle que calculée par l'équipement de géolocalisation, et en fonction de coordonnées du récepteur de communication laser externe au satellite, de sorte que la direction cible pointe vers ce récepteur de communication laser à partir du satellite.

Possiblement, l'équipement de géolocalisation du satellite peut être un équipement GPS, ou tout autre équipement de géolocalisation déployé indépendamment du satellite de l'invention.

Selon un perfectionnement d'un satellite qui est conforme au second aspect de l'invention, une précision de l'équipement de géolocalisation pour calculer la position du satellite, et une précision des moyens d'orientation du satellite peuvent être adaptées pour que les signaux de transmission laser qui sont émis à partir du satellite soient reçus par le récepteur de communication laser externe au satellite en maintenant fixe la direction d'émission des signaux de transmission laser par rapport au télescope. Autrement dit, le système de l'invention qui est embarqué à bord du satellite peut être dépourvu de mécanisme de pointage fin. La direction d'émission des signaux de transmission laser est alors ajustée uniquement en utilisant les moyens d'orientation du satellite.

Avantageusement lorsqu'aucun mécanisme de pointage fin n'est utilisé, le satellite peut aussi être dépourvu de système d'acquisition et de suivi de cible opérant à partir de signaux laser externes qui sont émis par le récepteur de communication laser externe au satellite. Dans ce cas, la précision de l'équipement de géolocalisation pour calculer la position du satellite, et la précision des moyens d'orientation du satellite sont adaptées pour que les signaux de transmission laser qui sont émis à partir du satellite soient reçus par le récepteur de communication laser externe au satellite, lorsque les moyens d'orientation du satellite sont commandés pour orienter la direction d'émission des signaux de transmission laser conformément à la direction cible. Le système de communication par signaux laser qui est embarqué à bord du satellite est alors particulièrement simple.

Enfin, un troisième aspect de l'invention propose un procédé de communication par signaux laser, qui est mis en œuvre à bord d'un satellite qui est en orbite autour de la Terre et conforme au deuxième aspect de l'invention, ce procédé comprenant comprend les étapes suivantes :
/1/ recevoir des signaux de géolocalisation, puis calculer une position du satellite à partir des signaux de géolocalisation reçus ;
/2/ à partir de la position du satellite calculée à l'étape /1/, et de coordonnées du récepteur de communication laser externe au satellite, calculer la direction cible pour des signaux de transmission laser à émettre à partir du satellite à destination du récepteur de communication laser ; puis
/3/ orienter le satellite conformément à la direction cible calculée, puis activer la source de rayonnement laser pour émettre les signaux de transmission laser vers le récepteur de communication laser.

Selon l'invention, l'étape /1/ est exécutée plusieurs fois pendant une révolution du satellite sur l'orbite, et les étapes /2/ et /3/ sont exécutées en utilisant la position du satellite telle que calculée à la dernière exécution de l'étape /1/. L'utilisation de la géolocalisation pour obtenir les coordonnées du satellite, en répétant l'opération de géolocalisation plusieurs fois pendant chaque révolution du satellite sur son orbite, permet d'obtenir la position du satellite avec une précision qui est suffisante pour supprimer le mécanisme de pointage grossier, et éventuellement aussi le mécanisme de pointage fin, et éventuellement supprimer en outre le système d'acquisition et de suivi de cible.

Dans des utilisations possibles d'un procédé conforme à l'invention, une altitude d'orbite du satellite peut être inférieure à 2000 km (kilomètre), et le récepteur de communication laser peut être situé à la surface de la Terre, ou à bord d'un autre satellite terrestre qui possède aussi une altitude d'orbite inférieure à 2000 km, ou à bord d'un autre satellite qui est en orbite géostationnaire.

D'autres particularités et avantages de la présente invention apparaîtront dans la description ci-après d'exemples de réalisation non limitatifs, en référence aux dessins annexés, dans lesquels :
- la figure 1 montre des zones d'un champ optique d'entrée d'un télescope à trois miroirs ;
- les figures 2 à 5 sont des schémas optiques de systèmes combinés d'imagerie et de communication par signaux laser, pour quatre modes de réalisation différents de l'invention ;
- la figure 6 montre schématiquement des équipements d'un satellite qui est conforme à la présente invention ; et
- la figure 7 illustre une utilisation d'un satellite conforme à la figure 5.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

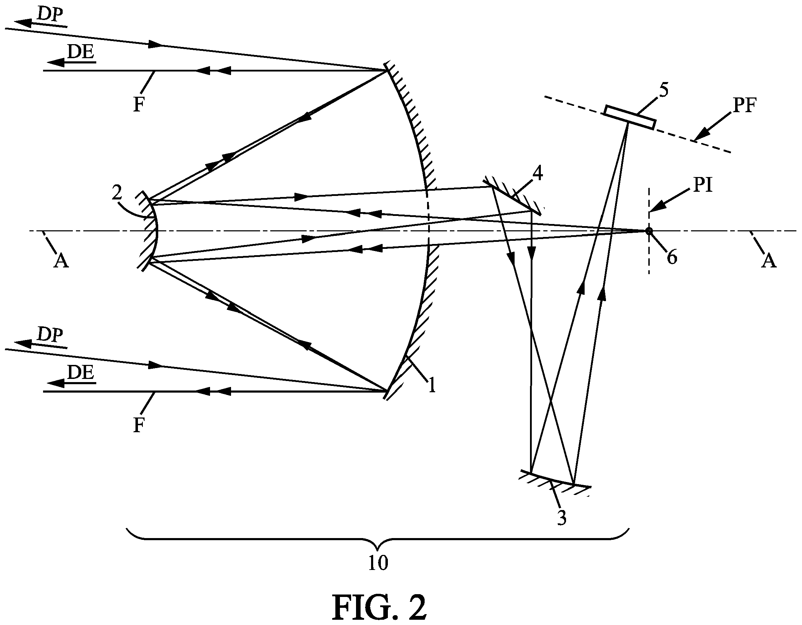

L'invention est d'abord décrite en détail pour un télescope 10 à trois miroirs, qui sont désignés par la référence 1 pour le miroir primaire, la référence 2 pour le miroir secondaire et la référence 3 pour le miroir tertiaire dans les figures 2 à 4. Le miroir primaire 1 est en général concave, le miroir secondaire 2 peut être convexe, et le miroir tertiaire 3 concave. Un tel télescope offre plusieurs possibilités pour disposer un capteur d'image dans le plan focal PF du télescope, afin de saisir une image d'une scène lointaine qui est contenue dans le champ optique d'entrée du télescope. Une première possibilité consiste à disposer le capteur d'image à proximité de l'axe optique du télescope, dans une zone appelée champ de vue de Cassegrain. Une seconde possibilité consiste à disposer le capteur d'image dans une zone qui est décentrée par rapport à l'axe optique du télescope, et appelée champ de vue de Korsch. De façon connue, la configuration du télescope à trois miroirs permet d'obtenir une qualité d'image qui est supérieure dans le champ de vue de Korsch, par rapport au champ de vue de Cassegrain. En outre, le champ de vue de Korsch est plus large que le champ de vue Cassegrain. Pour ces raisons, une configuration de Korsch est très utilisée en imagerie.

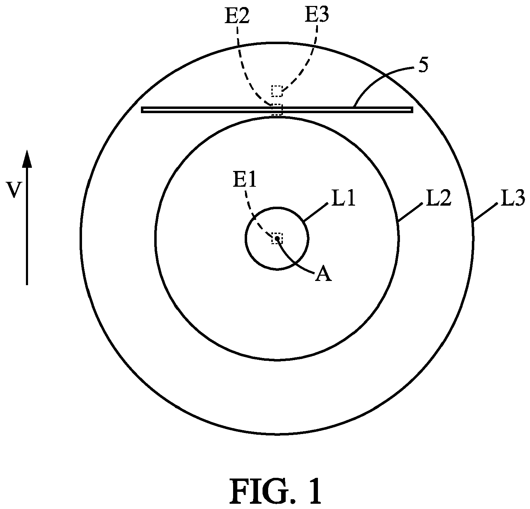

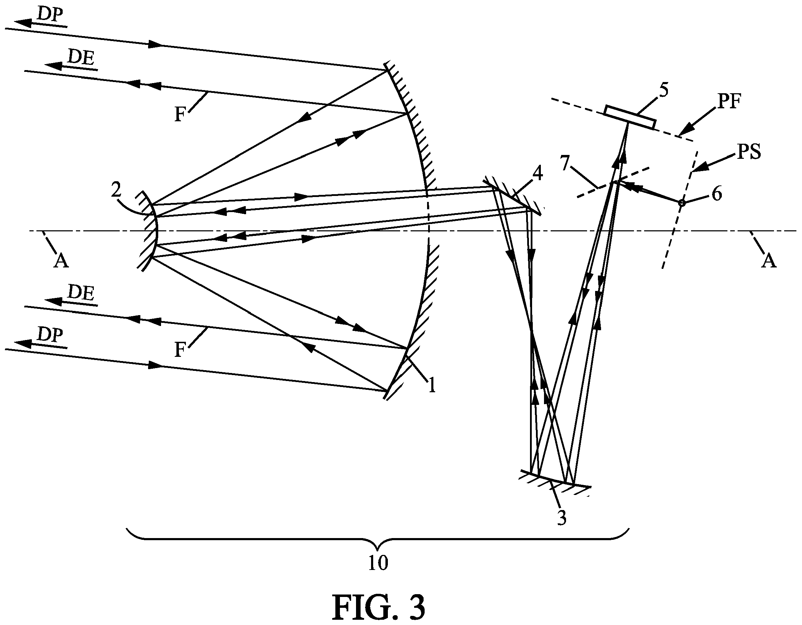

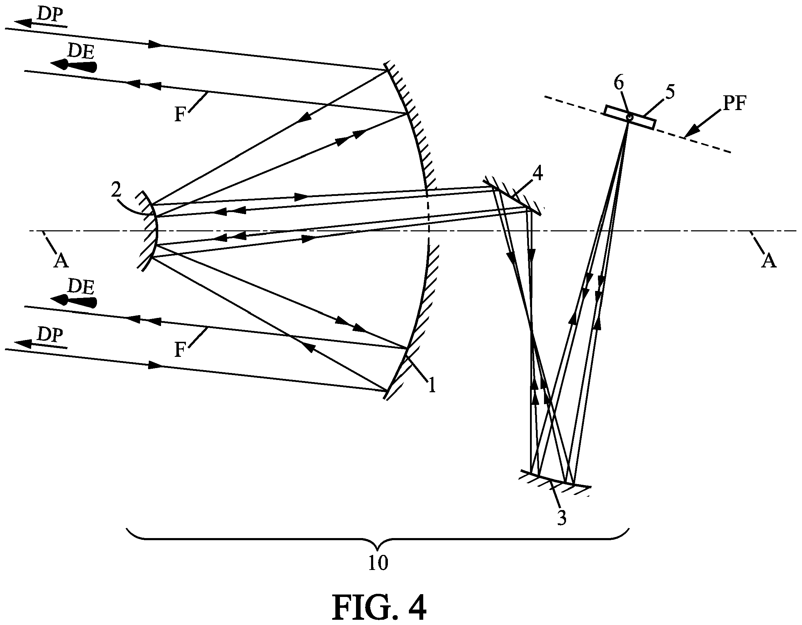

Dans la figure 1, la référence L3 désigne la limite périphérique extérieure du champ optique d'entrée d'un télescope à trois miroirs. L1 est alors la limite périphérique du champ de vue de Cassegrain, et L2 est la limite intérieure du champ de vue de Korsch. Autrement dit, le champ de vue de Korsch est compris entre les limites L2 et L3. Le capteur d'image 5 est situé dans la zone du plan focal PF qui correspond au champ de vue de Korsch, par exemple sous la forme d'un capteur linéaire qui est orienté perpendiculairement à la vitesse de défilement V de l'image dans le plan focal PF du télescope. Alors, le rayonnement laser d'une source qui est utilisée pour produire des signaux de transmission peut être introduit dans le champ optique du télescope, conformément à l'invention, à l'un des trois endroits suivants : à un endroit E1 qui est situé à l'intérieur de l'image du champ de vue de Cassegrain, correspondant au mode de réalisation de la figure 2, à un endroit E2 qui est superposé au capteur d'image à l'intérieur de l'image du champ de vue de Korsch, correspondant au mode de réalisation de la figure 3, ou à un endroit E3 qui est encore à l'intérieur de l'image du champ de vue de Korsch mais en étant décalé par rapport au capteur d'image, correspondant au mode de réalisation de la figure 4.

Dans un tel télescope à trois miroirs, le rayonnement d'imagerie qui provient d'une scène lointaine située dans la direction de pointage DP est réfléchi d'abord par le miroir primaire 1, puis par le miroir secondaire 2, puis par le miroir secondaire 3 et converge sur le capteur d'image 5. Des rayons qui correspondent à ce rayonnement d'imagerie sont indiqués dans les figures par des flèches simples. Un miroir de renvoi 4 peut être utilisé sur le trajet optique du rayonnement d'imagerie entre le miroir secondaire 2 et le miroir tertiaire 3. A sur la figure 1 ou A-A sur les figures 2 à 5 désigne l'axe optique du champ de Cassegrain, qui est perpendiculaire au plan focal PF.

La source de rayonnement laser qui est utilisée pour produire des signaux de transmission laser est désignée par la référence 6. Ce peut être par exemple une diode laser, ou la sortie d'une fibre d'émission de rayonnement laser. On pourra supposer dans la suite que la source 6 est de nature ponctuelle ou quasi-ponctuelle. Des rayons qui correspondent à ce rayonnement laser sont indiqués dans les figures par des flèches doubles.

Conformément à l'invention, au moins les miroirs primaire 1 et secondaire 2 sont utilisés en outre pour émettre les signaux de transmission laser vers un récepteur éloigné qui est destinataire de ces signaux. De façon connue, de tels signaux permettent de transmettre des données sur de très grandes distances avec des débits de transmission qui sont très élevés.

Dans le premier mode de réalisation de l'invention qui est représenté sur la figure 2, la source de rayonnement laser 6 est située dans une image du champ de vue de Cassegrain, à l'intérieur d'un plan focal intermédiaire du télescope 10 qui est formé par les miroirs primaire 1 et secondaire 2, à l'exclusion du miroir tertiaire 3. Sa direction d'émission est donc colinéaire avec l'axe optique A-A. Le plan focal intermédiaire, noté PI, est donc conjugué optiquement à travers les miroirs 1 et 2 avec des éléments de scène qui sont situés à très grande distance en avant du miroir primaire 1, dans le champ de vue de Cassegrain. Ainsi, lorsque le récepteur de communication laser est situé à grande distance sur l'axe optique A-A, en avant du télescope 10, le rayonnement laser qui est produit par la source 6, et qui constitue les signaux de transmission laser, est d'abord réfléchi par le miroir secondaire 2, puis par le miroir primaire 1, puis se propage sous forme d'un faisceau parallèle F en direction du récepteur éloigné. Dans ce mode particulier de réalisation de l'invention, la direction d'émission des signaux de transmission laser, notée DE, est donc parallèle à l'axe optique A-A du champ de Cassegrain du télescope 10 en avant du miroir primaire 1.

Dans le deuxième mode de réalisation de l'invention qui est représenté sur la figure 3, et qui reprend un télescope de type Korsch tel que décrit en référence avec les figures 1 et 2, la source ponctuelle ou quasi-ponctuelle de rayonnement laser 6 est disposée dans un plan focal secondaire PS dont l'axe optique à travers les trois miroirs 1, 2 et 3 est colinéaire à celui du plan focal PF, utilisé pour contenir le capteur d'image 5. Pour cela, un élément de duplication de plan focal, désigné par la référence 7, peut être disposé sur le trajet des rayonnements entre le miroir tertiaire 3 et le capteur d'image 5. Le plan focal secondaire PS est ainsi distinct du plan focal PF, si bien que la source de rayonnement laser 6 peut être située dans le plan focal secondaire PS à un endroit qui est superposé à l'image d'un point du capteur d'image 5 par l'élément 7. Si la source 6 est superposée de cette façon à l'image du milieu du capteur d'image 5 par l'élément 7, alors la direction d'émission des signaux de transmission laser DE est confondue avec la direction de pointage du télescope DP (les flèches DE et DP sont parallèles sur la figure 3). Par exemple, lorsque le rayonnement laser qui est produit par la source 6 possède une longueur d'onde égale à 1,55 micromètres, et le rayonnement auquel est sensible le capteur d'image 5 est dans l'intervalle de lumière visible, l'élément de duplication du plan focal 7 peut être une lame dichroïque. Alternativement, ce peut être un miroir qui est pourvu d'une ouverture, pour réfléchir l'un des deux rayonnements, soit celui qui est destiné au capteur d'image 5 soit celui qui est produit par la source 6, et pour transmettre l'autre rayonnement à travers l'ouverture, en fonction des dimensions transversales des faisceaux des deux rayonnements au niveau de l'élément 7.

Enfin, dans le troisième mode de réalisation de l'invention qui est illustré par la figure 4, et qui reprend encore le télescope de Korsch des figures 1 et 2, la source de rayonnement laser 6 peut être disposée dans le plan focal PF du télescope 10, à un endroit de ce plan qui est décalé par rapport au capteur d'image 5. Par exemple, la source 6 peut être située au droit du milieu du capteur d'image 5 à l'intérieur du plan focal PF, correspondant à une position en dehors du plan de la figure 4. Dans ce cas, la direction d'émission DE est oblique par rapport au plan de la figure 4 (flèches DE à bords de trait qui ne sont pas parallèles), avec une composante dans le plan de la figure qui est parallèle à la direction de pointage DP.

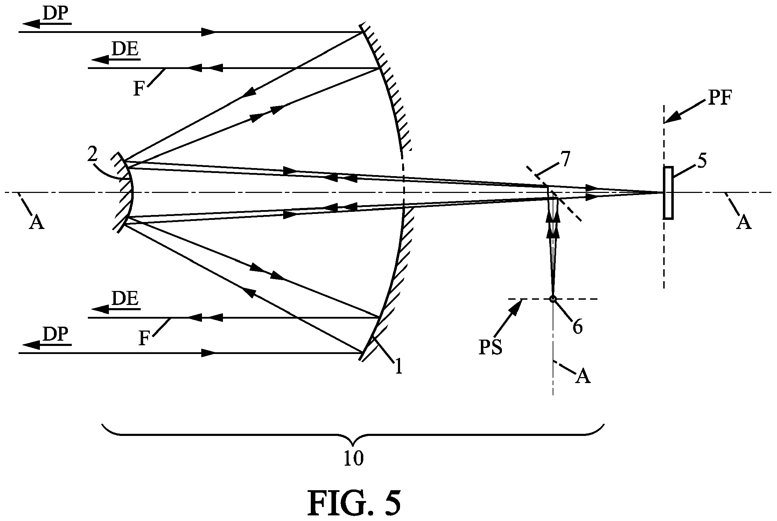

Pour montrer la généralité de l'invention par rapport au type de télescope utilisé, elle est maintenant décrite pour un télescope 10 de type Cassegrain, en référence à la figure 5. Un tel télescope ne possède que deux miroirs : un miroir primaire 1 qui est concave et un miroir secondaire 2 qui est convexe. En utilisant de nouveau un élément 7 pour dupliquer le plan focal PF du télescope 10, le capteur d'image 5 peut être situé sur l'axe optique A-A du télescope, alors que la source de rayonnement laser 6 peut être située à l'intersection entre l'image de l'axe optique A-A par l'élément 7 et le plan focal secondaire PS qui est aussi formé par cet élément 7. Dans une telle configuration, la direction de pointage DP du télescope 10 pour la fonction d'imagerie, et la direction DE d'émission des signaux de transmission laser sont toutes deux confondues avec l'axe optique A-A.

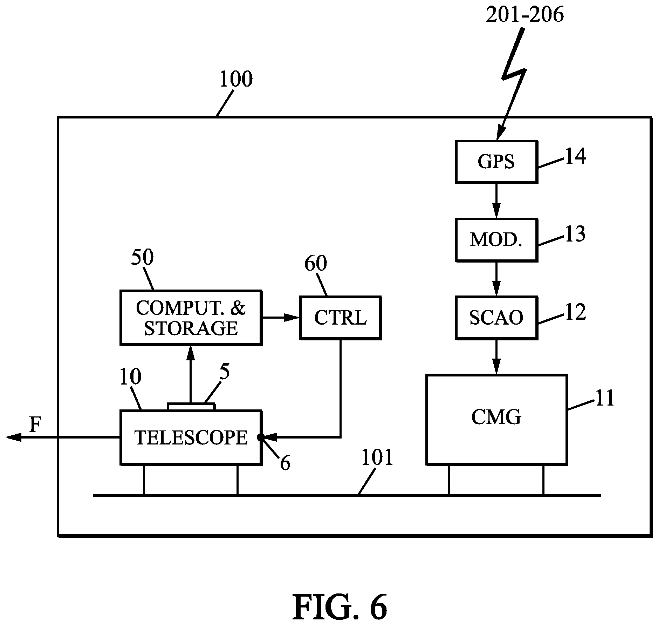

Dans les quatre modes de réalisation de systèmes combinés d'imagerie et de communication par signaux laser qui viennent d'être décrits en référence aux figures 2 à 5, le miroir primaire 1 et le miroir secondaire 2 sont communs à la fonction d'imagerie et à la fonction d'émission des signaux laser. En outre, le miroir tertiaire 3 est aussi commun aux deux fonctions dans les modes de réalisation des figures 3 et 4. Les miroirs communs aux deux fonctions forment, avec la source de rayonnement laser 6, la voie d'émission de communication par signaux laser. Cette voie d'émission comprend en outre un contrôleur de communication laser qui est noté CTRL et désigné par la référence 60 dans la figure 6.

Optionnellement, une voie de réception de signaux de communication laser (non représentée) peut être ajoutée pour former un terminal d'émission et de réception pour communication par signaux laser. La combinaison de la voie de réception avec la voie d'émission, notamment en utilisant les mêmes miroirs pour collecter et transmettre le rayonnement laser selon des sens de propagation qui sont opposés entre les deux voies, n'appartient pas directement à l'invention et peut être reprise des terminaux de communication par signaux laser connus de l'Homme du métier. Avantageusement, les chemins optiques du rayonnement laser qui est produit par la source 6 pour les signaux de transmission destinés au récepteur éloigné, et des signaux externes qui proviennent de ce récepteur éloigné, peuvent suivre des chemins optiques qui sont identiques à l'intérieur du télescope, bien que parcourus en sens inverses. La voie de réception est alors constituée par les miroirs du télescope qui sont communs aux fonctions d'imagerie et d'émission des signaux de transmission laser, par un capteur de réception sur lequel le rayonnement des signaux laser externes qui sont reçus est focalisé par les miroirs, et par une partie du contrôleur de communication laser 60 qui est dédiée à la fonction de réception.

En référence à la figure 6, un satellite 100 transporte un système d'imagerie et de communication par signaux laser qui peut être conforme à l'un des modes de réalisation qui viennent d'être décrits. Le télescope 10 et le capteur d'image 5 sont fixés rigidement sur un châssis 101 du satellite, si bien que la direction de pointage DP pour la fonction d'imagerie est fixe par rapport à l'ensemble du satellite 100. Cette direction de pointage DP est donc dirigée vers une scène à saisir en image en orientant l'ensemble du satellite 100. Pour cela, le satellite 100 est équipé de moyens 11 de variation de son orientation, appelés moyens d'orientation du satellite, et d'un système de contrôle d'attitude et d'orbite 12, noté SCAO. Par exemple, les moyens 11 peuvent être du type CMG pour «control moment gyro» en anglais, ou du type roue de réaction, ou mixte. Le système de contrôle d'attitude et d'orbite 12 peut être d'un modèle connu de l'Homme du métier. Usuellement, les systèmes de contrôle d'attitude et d'orbite utilisent un référentiel inertiel pour repérer la position et l'orientation du satellite, c'est-à-dire un référentiel qui est fixe par rapport à des étoiles lointaines. La référence 50 désigne une unité de traitement et de stockage des données d'images qui sont générées par chaque prise de vue réalisée en utilisant le télescope 10 et le capteur d'image 5. Cette unité de traitement et de stockage de données 50 est notée «COMPUT. & STORAGE» dans la figure 6.

Le terminal d'émission de signaux laser qui utilise une partie au moins du télescope 10, conformément à l'invention, est dépourvu de mécanisme de pointage grossier puisque le télescope 10 est fixé rigidement sur le châssis 101 du satellite 100, et dépourvu de miroir de sortie orientable.

La source de rayonnement laser 6 est fixe par rapport au télescope 10, mais la direction d'émission DE des signaux de transmission laser peut éventuellement être variée par rapport au châssis 101 du satellite 100 en utilisant un mécanisme de pointage fin. Un tel mécanisme de pointage fin peut être disposé optiquement entre la source 6 et la partie du télescope 10 qui est utilisée pour l'émission du rayonnement laser vers l'extérieur. Mais un tel mécanisme de pointage fin, qui n'est pas représenté dans les figures, est optionnel par rapport à l'invention, et de préférence n'est pas pourvu dans le terminal d'émission de signaux laser qui est embarqué à bord du satellite 100. Alors, en l'absence de mécanisme de pointage fin, la direction d'émission DE des signaux de transmission laser ne peut être ajustée qu'en utilisant les moyens d'orientation du satellite 11. Or pour que les signaux de transmission laser puissent être effectivement reçus par le récepteur de communication laser qui est situé à grande distance du satellite 100, l'ajustement de la direction d'émission DE en utilisant seulement les moyens d'orientation du satellite 11 doit être suffisamment précis. Mais les deux contributions d'erreur suivantes peuvent réduire la précision de l'ajustement de la direction d'émission DE qui est réalisé en orientant l'ensemble du satellite :
/i/ une première contribution d'erreur qui se produit lors de la détermination de la direction cible dans laquelle les signaux de transmission laser doivent être émis, par rapport à la direction réelle dans laquelle se trouve le récepteur éloigné auquel les signaux sont destinés ; et
/ii/ une seconde contribution d'erreur qui apparaît entre la direction cible utilisée comme consigne d'orientation du satellite 100, et la direction d'émission DE qui est produite réellement par les moyens d'orientation du satellite 11.

L'erreur totale qui est acceptable dépend du diamètre du faisceau F de rayonnement laser qui est émis par le télescope 10, mesuré au niveau du récepteur de communication laser auquel les signaux laser sont destinés. Etant donné que le satellite 100 possède une mission d'imagerie qui consiste à saisir des images de la surface de la Terre, son altitude d'orbite est basse, typiquement entre 400 km et 2000 km. Alors deux configurations différentes peuvent être utilisées pour transmettre par communication laser les données qui correspondent aux images saisies :
Configuration 1 : les données sont transmises à un récepteur de communication laser qui est situé sur Terre, ou bien à un autre satellite qui est aussi situé sur une orbite à basse altitude. Dans ces deux cas, la distance de transmission est typiquement inférieure à 5000 km ;
Configuration 2 : les données sont transmises à un relais de communication laser qui est situé à bord d'un satellite géostationnaire. La distance de transmission est alors de l'ordre de l'altitude de l'orbite géostationnaire, c'est-à-dire comprise entre 33.000 km et 40.000 km environ.

Pour la configuration 1, l'erreur totale de pointage de la direction d'émission DE des signaux de transmission laser doit être inférieure ou égale à 20 µrad (microradian).

Des systèmes de contrôle d'attitude et d'orbite et des moyens d'orientation du satellite qui existent déjà permettent d'orienter le satellite avec une erreur qui est inférieure à 10 µrad, pour une direction cible qui est déterminée dans un référentiel inertiel. Cette erreur, qui correspond à la contribution /ii/ indiquée ci-dessus, est donc acceptable même en l'absence de mécanisme de pointage fin.

Les coordonnées du récepteur de communication laser auquel les signaux laser sont destinés, sont en général connues avec une très grande précision dans le référentiel terrestre, et leur conversion dans le système inertiel ne pose pas de problème. La contribution d'erreur /i/ résulte alors principalement du calcul de la position du satellite 100 pour l'instant auquel les signaux de transmission laser seront émis.

Classiquement, c'est-à-dire avant la présente invention, cette position du satellite 100 pour l'instant d'émission des signaux de transmission laser était calculée à partir d'une position antérieure du satellite, dont la mesure n'était actualisée qu'une fois à chaque révolution du satellite sur son orbite, soit typiquement une fois toutes les 90 minutes environ pour une orbite à basse altitude. La position du satellite à l'instant d'émission était calculée à partir de la dernière actualisation de la mesure de la position réelle du satellite. Or ce calcul est responsable d'une partie principale de la contribution d'erreur /i/, aboutissant à une erreur qui peut atteindre 1000 µrad (microradian) entre la direction cible et la direction réelle dans laquelle se trouve le récepteur de communication laser à l'instant d'émission. Une telle erreur ne pose pas de problème pour les prises de vues de la fonction d'imagerie, mais est incompatible avec la précision qui est nécessaire pour une communication par signaux laser (erreur totale de pointage de la direction d'émission DE inférieure ou égale à 20 µrad).

Pour réduire la contribution d'erreur /i/, selon une caractéristique supplémentaire de l'invention, un équipement de géolocalisation 14 (figure 6) et un module 13 pour calculer la direction cible de l'émission des signaux de transmission laser, sont aussi embarqués à bord du satellite 100. L'équipement 14 comprend un récepteur de signaux de géolocalisation en provenance d'une constellation de satellites de géolocalisation 201-206, et un calculateur pour déduire la position du satellite 100 à partir des signaux de géolocalisation reçus. Par exemple, l'équipement de géolocalisation 14 peut être adapté pour le système GPS, acronyme pour «global positioning system» en anglais, ou pour tout autre système de géolocalisation qui est déployé autour de la Terre. La précision sur la position du satellite 100 qui est fournie par l'équipement de géolocalisation 14 est alors de quelques mètres, et cette position déterminée par géolocalisation peut être actualisée autant que nécessaire, voire être déterminée en temps réel pour chaque séquence d'émission de signaux de transmission laser. Il est ainsi possible d'éviter en quasi-totalité la contribution d'erreur /i/ qui est due au calcul d'une nouvelle position du satellite à partir d'une position mesurée trop ancienne.

Le module 13, noté MOD., reçoit les coordonnées de la position du satellite 100 telles qu'elles résultent de la dernière géolocalisation effectuée. Ces coordonnées sont en général exprimées dans le référentiel terrestre. Les coordonnées du satellite 100 à l'instant ultérieur d'émission des signaux de transmission laser en sont déduites, par exemple encore dans le référentiel terrestre, mais la durée entre l'instant de la dernière géolocalisation effectuée et l'instant d'émission est suffisamment réduite pour que ce calcul de déplacement du satellite 100 ne provoque qu'une erreur négligeable. Le module 13 convertit alors dans le référentiel inertiel, les coordonnées du satellite 100 au futur instant d'émission, ainsi que celles du récepteur de communication laser au même futur instant d'émission, puis en déduit la direction cible d'émission dans le référentiel inertiel. La contribution d'erreur /i/ qui est obtenue de cette façon, concernant la direction cible d'émission des signaux de transmission laser, est de quelques microradians seulement, ce qui est compatible avec l'exigence indiquée plus haut pour des communications par signaux laser dans les configurations 1 et 2.

La direction cible qui est ainsi calculée par le module 13 est transmise au système de contrôle d'attitude et d'orbite 12, et ce dernier commande les moyens d'orientation 11 afin d'orienter le satellite 100 conformément à la direction cible pour l'instant d'émission des signaux de transmission laser. Essentiellement, le gain de précision qui est nécessaire pour la direction d'émission DE des signaux de transmission laser, est procuré par la précision des systèmes de géolocalisation existants, et par la disponibilité presque permanente d'une nouvelle actualisation de la position du satellite lorsqu'elle est déterminée par géolocalisation.

Les données qui correspondent à des images saisies antérieurement en utilisant le télescope 10 et le capteur d'image 5, peuvent alors être transmises par l'unité de traitement et de stockage 50 au contrôleur de communication laser 60. Celui-ci déclenche alors leur transmission en actionnant la source de rayonnement laser 6 lorsque le satellite 100 est dans la position d'émission sélectionnée sur son orbite, et que la direction d'émission DE a été amenée selon la direction cible par les moyens d'orientation du satellite 11.

Au cas où la précision sur la direction d'émission DE des signaux de transmission laser serait néanmoins insuffisante, notamment pour la configuration 2 mentionnée plus haut, et pour un satellite 100 conforme à l'invention tel qu'il vient d'être décrit, l'un au moins des deux équipements supplémentaires suivants peuvent être introduits à bord du satellite 100, au sein de la partie de communication laser du système combiné d'imagerie et de communication laser :
- un système d'acquisition et de suivi de cible : un tel système comprend un détecteur à matrice de photo-éléments, qui sont sensibles au rayonnement laser des signaux de communication reçus en provenance du récepteur de communication laser éloigné. Ces signaux reçus peuvent être indifféremment des signaux de balises, des signaux de commande ou des signaux de données. Le détecteur matriciel est placé dans le plan focal PF du télescope 10, ou dans un plan focal secondaire qui est produit à l'aide d'un élément de duplication de plan focal disposé de façon appropriée. Alors l'écart entre un point de la matrice du détecteur auquel est détecté le rayonnement laser des signaux reçus, et un point de référence qui correspond à la direction d'émission DE, peut servir de paramètre de rétroaction qui est transmis au système de contrôle d'attitude et d'orbite. Un tel fonctionnement par rétroaction en temps réel améliore la précision de la direction d'émission DE par rapport à la direction réelle du récepteur de communication laser ;
- un mécanisme de pointage fin : un tel mécanisme à base d'un miroir mobile de petites dimensions permet d'ajuster la direction d'émission DE en temps réel avec une constante de temps de réaction qui est très courte, en complément de l'ajustement qui est effectué par les moyens d'orientation du satellite 11.

Préférablement, l'ajout d'un mécanisme de pointage fin n'est mis en œuvre qu'en second lieu, si l'ajout du système d'acquisition et de suivi de cible, effectué en premier lieu, n'a pas été suffisant pour obtenir la précision nécessaire pour la direction d'émission DE sans mécanisme de pointage fin. Généralement, l'orientation du miroir mobile du mécanisme de pointage fin est commandée en fonction de la déviation sur le détecteur matriciel du système d'acquisition et de suivi de cible, du point auquel est reçu le rayonnement laser en provenance du récepteur de communication laser éloigné.

La mise en œuvre de chacun de ces deux équipements supplémentaires dans un système combiné d'imagerie et de communication laser qui est conforme à l'invention, est identique à celle utilisée dans des terminaux de communication laser qui sont indépendants d'un équipement d'imagerie, et qui est supposée bien connue. Pour cette raison, les mises en œuvre de ces deux équipements optionnels ne sont pas décrites à nouveau ici.

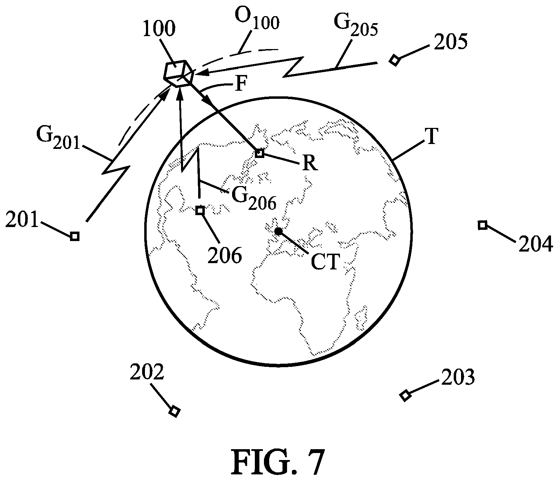

Enfin, la Figure 7 montre la Terre, notée T et ayant pour centre le point CT. Le satellite 100 qui est conforme à l'invention se déplace sur l'orbite O₁₀₀, dans la région des orbites à basses altitudes. Indépendamment du satellite 100, les satellites de géolocalisation 201-206, sans limitation sur leur nombre, forment une constellation capable de couvrir n'importe quelle position du satellite 100 sur l'orbite O₁₀₀. A une position sur l'orbite O₁₀₀, le satellite 100 reçoit des signaux de géolocalisation de certains des satellites de géolocalisation, par exemples les signaux G₂₀₁, G₂₀₅ et G₂₀₆ respectivement émis par les satellites 201, 205 et 206. La référence R désigne le récepteur de communication laser dans un cas où il est situé sur Terre. Alors la mise en œuvre de l'invention permet au satellite 100 d'émettre des signaux de transmission laser à destination du récepteur R, sous forme du faisceau de rayonnement laser F, avec une précision dans la direction d'émission qui est suffisante pour obtenir une qualité de réception satisfaisante.

Enfin, il est rappelé que l'invention peut être mise en œuvre de façon similaire lorsque le récepteur de communication laser R est à bord d'un autre satellite à basse altitude d'orbite, ou à bord d'un satellite géostationnaire.

Il est aussi rappelé que l'invention est indépendante du type de télescope utilisé, dans la mesure où le télescope comporte au moins deux miroirs utiles dans la formation des images, c'est-à-dire des miroirs qui modifient la convergence des faisceaux de rayonnement.

Finalement, il est encore rappelé que l'utilisation d'un système d'acquisition et de suivi de cible, et celle d'un mécanisme de pointage fin, sont optionnelles, et que des modes de réalisation préférés de l'invention sont dépourvus de ces équipements.

## Revendications

1. Système combiné d'imagerie et de communication par signaux laser, comprenant :
- un télescope (10), comprenant au moins un miroir primaire (1) et un miroir secondaire (2), et adapté pour former dans un plan focal (PF) dudit télescope, une image d'une scène située dans une direction de pointage (DP) du télescope, par réflexion d'un rayonnement reçu en provenance de la scène au moins sur le miroir primaire puis sur le miroir secondaire ; et
- un capteur d'image (5) disposé dans le plan focal (PF) du télescope (10), et adapté pour saisir l'image de la scène ; et
- une source de rayonnement laser (6), adaptée pour produire des signaux de transmission laser,
**caractérisé en ce que** ledit système combiné d'imagerie et de communication par signaux laser est adapté pour être fixé sur un châssis de satellite, de sorte que la direction de pointage du télescope soit fixe par rapport au châssis,
et **en ce que** la source de rayonnement laser (6) est agencée de sorte que le rayonnement laser qui constitue les signaux de transmission laser soit réfléchi au moins par le miroir secondaire (2) puis par le miroir primaire (1) pour être émis vers un récepteur de communication laser (R) externe au système.

2. Système selon la revendication 1, dans lequel le télescope (10) comprend en outre un miroir tertiaire (3) et est adapté pour former dans le plan focal (PF) dudit télescope, l'image de la scène par réflexion du rayonnement reçu en provenance de ladite scène successivement sur le miroir primaire (1), puis le miroir secondaire (2), puis le miroir tertiaire.

3. Système selon la revendication 2, agencé de sorte que le rayonnement laser qui constitue les signaux de transmission laser soit réfléchi par le miroir secondaire (2) puis par le miroir primaire (1) sans être réfléchi par le miroir tertiaire (3) pour être émis vers le récepteur de communication laser (R) externe au système, ledit rayonnement laser qui constitue les signaux de transmission laser étant introduit dans un plan focal intermédiaire (PI) du télescope (10) qui est effectif pour du rayonnement réfléchi par les miroirs primaire et secondaire à l'exclusion du miroir tertiaire.

4. Système selon la revendication 2, agencé de sorte que le rayonnement laser qui constitue les signaux de transmission laser soit réfléchi successivement par le miroir tertiaire (3), puis par le miroir secondaire (2), puis par le miroir primaire (1) pour être émis vers le récepteur de communication laser (R) externe au système,
et de sorte que ledit rayonnement laser qui constitue les signaux de transmission laser soit amené dans le plan focal (PF) du télescope (10) à un endroit dudit plan focal du télescope qui est distant du capteur d'image (5).

5. Système selon la revendication 2, comprenant en outre un élément de duplication de plan focal (7) qui est agencé pour créer une image du plan focal (PF) du télescope (10), appelée plan focal secondaire (PS),
et le système étant agencé de sorte que le rayonnement laser qui constitue les signaux de transmission laser soit amené dans le plan focal secondaire (PS) à un endroit dudit plan focal secondaire qui est superposé optiquement au capteur d'image (5) par l'élément de duplication de plan focal (7), et de sorte que le rayonnement laser des signaux de transmission laser, produit par la source de rayonnement laser (6), soit dirigé par ledit élément de duplication de plan focal vers le miroir tertiaire (3), puis réfléchi successivement par ledit miroir tertiaire, puis par le miroir secondaire (2), puis par le miroir primaire (1) pour être émis vers le récepteur de communication (R) externe audit système.

6. Système selon la revendication 5, dans lequel l'élément de duplication de plan focal (7) comprend un miroir ou une lame dichroïque, agencé pour réfléchir l'un parmi le rayonnement laser des signaux de transmission laser et le rayonnement reçu en provenance de la scène, et transmettre sans réflexion par ledit miroir ou ladite lame dichroïque, l'autre parmi ledit rayonnement laser des signaux de transmission laser et ledit rayonnement reçu en provenance de la scène.

7. Système selon l'une quelconque des revendications précédentes, comprenant en outre une voie de réception de signaux externes de communication laser, ladite voie de réception comprenant un détecteur de réception et étant agencée pour qu'un rayonnement desdits signaux externes qui sont émis par le récepteur de communication laser (R) externe audit système, soit réfléchi par au moins le miroir primaire (1) puis par le miroir secondaire (2) avant d'atteindre le détecteur de réception.

8. Système selon la revendication 7, agencé de sorte que le rayonnement laser des signaux de transmission laser qui sont émis par ledit système, et le rayonnement des signaux externes émis par le récepteur de communication laser (R) externe audit système, qui atteint le détecteur de réception, suivent des chemins optiques qui sont identiques à l'intérieur du télescope (10) en étant parcourus selon des sens de propagation qui sont opposés.

9. Satellite (100) destiné à être placé en orbite autour de la Terre, comprenant :
- un système combiné d'imagerie et de communication par signaux laser, qui est conforme à l'une quelconque des revendications précédentes, et qui est fixé sur un châssis (101) du satellite (100) de sorte que la direction de pointage (DP) du télescope (10) soit fixe par rapport au châssis ;
- des moyens d'orientation du satellite (11) ; et
- un système de contrôle d'attitude et d'orbite (12), adapté pour commander les moyens d'orientation du satellite (11) afin d'amener une direction d'émission (DE) des signaux de transmission laser vers une direction cible, de sorte que le système combiné d'imagerie et de communication par signaux laser émette ensuite les signaux de transmission laser conformément à la direction cible,
le satellite (100) comprenant en outre :
- un équipement de géolocalisation (14) adapté pour recevoir des signaux de géolocalisation, et pour calculer une position du satellite (100) à partir des signaux de géolocalisation reçus ; et
- un module (13) adapté pour calculer la direction cible en fonction de la position du satellite (100) telle que calculée par l'équipement de géolocalisation (14), et en fonction de coordonnées du récepteur de communication laser (R) externe au satellite, de sorte que la direction cible pointe vers le récepteur de communication laser à partir du satellite.

10. Satellite (100) selon la revendication 9, dans lequel l'équipement de géolocalisation (14) est un équipement GPS.

11. Satellite (100) selon la revendication 9 ou 10, dans lequel une précision de l'équipement de géolocalisation (14) pour calculer la position du satellite, et une précision des moyens d'orientation du satellite (11) sont adaptées pour que les signaux de transmission laser émis à partir du satellite soient reçus par le récepteur de communication laser (R) externe audit satellite en maintenant fixe la direction d'émission (DE) des signaux de transmission laser par rapport au télescope (10).

12. Satellite (100) selon la revendication 11, dépourvu de détecteur d'acquisition et de suivi de cible opérant à partir de signaux laser externes émis par le récepteur de communication laser (R) externe au satellite, et dans lequel la précision de l'équipement de géolocalisation (14) pour calculer la position du satellite, et la précision des moyens d'orientation du satellite (11) sont adaptées pour que les signaux de transmission laser émis à partir du satellite soient reçus par le récepteur de communication laser externe audit satellite, lorsque les moyens d'orientation du satellite sont commandés pour orienter la direction d'émission (DE) des signaux de transmission laser conformément à la direction cible.

13. Procédé de communication par signaux laser, mis en œuvre à bord d'un satellite (100) qui est en orbite autour de la Terre et conforme à l'une quelconque des revendications 9 à 12, le procédé comprenant les étapes suivantes :
/1/ recevoir des signaux de géolocalisation, puis calculer une position du satellite à partir des signaux de géolocalisation reçus ;
/2/ à partir de la position du satellite (100) calculée à l'étape /1/, et de coordonnées du récepteur de communication laser (R) externe audit satellite, calculer la direction cible pour des signaux de transmission laser à émettre à partir du satellite à destination du récepteur de communication laser ; puis
/3/ orienter le satellite (100) conformément à la direction cible calculée, puis activer la source de rayonnement laser (6) pour émettre les signaux de transmission laser vers le récepteur de communication laser (R),
suivant lequel l'étape /1/ est exécutée plusieurs fois pendant une révolution du satellite (100) sur l'orbite, et les étapes /2/ et /3/ sont exécutées en utilisant la position du satellite telle que calculée à la dernière exécution de l'étape /1/.

14. Procédé selon la revendication 13, suivant lequel une altitude d'orbite du satellite (100) est inférieure à 2000 km, et le récepteur de communication laser (R) est situé à la surface de la Terre, ou à bord d'un autre satellite terrestre ayant une autre altitude d'orbite qui est aussi inférieure à 2000 km, ou à bord d'un autre satellite qui est en orbite géostationnaire.

## Patentansprüche

1. Kombiniertes Bildgebungs- und Laserkommunikationssystem, aufweisend:
- ein Teleskop (10), das mindestens einen Primärspiegel (1) und einen Sekundärspiegel (2) aufweist und eingerichtet ist, in einer Fokalebene (PF) des Teleskops ein Bild einer in einer Visierrichtung (DP) des Teleskops gelegenen Szene durch Reflexion einer von der Szene aus empfangenen Strahlung zumindest an dem Primärspiegel, dann an dem Sekundärspiegel zu erzeugen; und
- einen in der Fokalebene (PF) des Teleskops (10) angeordneten Bildsensor (5), der eingerichtet ist, das Bild der Szene zu erfassen; und
- eine Laserstrahlungsquelle (6), die eingerichtet ist, Lasersendesignale zu erzeugen, **dadurch gekennzeichnet, dass** das kombinierte Bildgebungs- und Laserkommunikationssystem eingerichtet ist, an einem Rahmen des Satelliten befestigt zu werden, so dass die Versierrichtung des Teleskops bezüglich des Rahmens fest ist,
und dass die Laserstrahlungsquelle (6) derart konfiguriert ist, dass die Laserstrahlung, die die Lasersendesignale bildet, zumindest von dem Sekundärspiegel (2), dann von dem Primärspiegel (1) reflektiert wird, um hin zu einem systemexternen Laserkommunikationsempfänger (R) emittiert zu werden.

2. System nach Anspruch 1, in welchem das Teleskop (10) ferner einen Tertiärspiegel (3) aufweist und eingerichtet ist, durch Reflexion der von der Szene aus empfangenen Strahlung sukzessiv an dem Primärspiegel (1), dann dem Sekundärspiegel (2), dann dem Tertiärspiegel das Bild der Szene in der Fokalebene (PF) des Teleskops zu erzeugen.

3. System nach Anspruch 2, das derart konfiguriert ist, dass die Laserstrahlung, die die Lasersendesignale bildet, von dem Sekundärspiegel (2), dann von dem Primärspiegel (1) reflektiert wird, ohne von dem Tertiärspiegel (3) reflektiert zu werden, um hin zu dem systemexternen Laserkommunikationsempfänger (R) emittiert zu werden, wobei die Laserstrahlung, die die Lasersendesignale bildet, in eine Zwischenfokalebene (PI) des Teleskops (10) gebracht wird, die wirksam für Strahlung ist, die von dem Primär- und Sekundärspiegel unter Ausschluss des Tertiärspiegels reflektiert worden ist.

4. System nach Anspruch 2, das konfiguriert ist,
derart dass die Laserstrahlung, die die Lasersendesignale bildet, sukzessiv von dem Tertiärspiegel (3), dann von Sekundärspiegel (2), dann von dem Primärspiegel (1) reflektiert wird, um hin zu dem systemexternen Laserkommunikationsempfänger (R) emittiert zu werden,
und derart, dass die Laserstrahlung, die die Lasersendesignale bildet, in die Fokalebene (PF) des Teleskops (10) zu einem Ort der Fokalebene des Teleskops gebracht wird, der im Abstand von dem Bildsensor (5) angeordnet ist.

5. System nach Anspruch 2, ferner aufweisend ein Fokalebene-Verdopplungselement (7), das konfiguriert ist, ein Bild der Fokalebene (PF) des Teleskops, Sekundärfokalebene (PS) genannt, zu erzeugen,
und das System derart konfiguriert ist, dass die Laserstrahlung, die die Lasersendesignale bildet, in die Sekundärfokalebene (PS) zu einem Ort der Sekundärfokalebene gebracht wird, der mittels des Fokalebene-Verdopplungselements (7) dem Bildsensor (5) optisch überlagert ist, und derart, dass die von der Laserstrahlungsquelle (6) erzeugte Laserstrahlung der Lasersendesignale von dem Fokalebene-Verdopplungselements hin zu dem Tertiärspiegel (3) gelenkt wird, dann sukzessiv von dem Tertiärspiegel, dann von dem Sekundärspiegel (2), dann von dem Primärspiegel (1) reflektiert wird, um hin zu dem systemexternen Kommunikationsempfänger (R) emittiert zu werden.

6. System nach Anspruch 5, in welchem das Fokalebene-Verdopplungselements (7) einen Spiegel oder ein dichroitisches Blättchen aufweist und derart konfiguriert ist, um
entweder die Laserstrahlung der Lasersendesignale zu reflektieren und die von der Szene aus empfangene Strahlung ohne Reflexion an dem Spiegel oder dem dichroitischen Blättchen zu senden,
oder die von der Szene aus empfangene Strahlung zu reflektieren und die Laserstrahlung der Lasersendesignale ohne Reflexion an dem Spiegel oder dem dichroitischen Blättchen zu senden.

7. System nach einem der vorstehenden Ansprüche, ferner aufweisend einen Empfangsweg für externe Laserkommunikationssignale, wobei der Empfangsweg einen Empfangsdetektor aufweist und derart konfiguriert ist, dass eine Strahlung der von dem systemexternen Laserkommunikationsempfänger (R) emittierten externen Signale von zumindest dem Primärspiegel (1), dann von dem Sekundärspiegel (2) reflektiert wird, bevor sie den Empfangsdetektor erreicht.

8. System nach Anspruch 7, das derart konfiguriert ist, dass die Laserstrahlung der von dem System emittierten Lasersendesignale und die Strahlung der von dem systemexternen Laserkommunikationsempfänger (R) emittierten externen Signale, die den Empfangsdetektor erreicht, optischen Wegen folgen, die im Innern des Teleskops (10) identisch sind und in entgegengesetzten Ausbreitungsrichtungen durchlaufen werden.

9. Satellit (100), der vorgesehen, in eine Umlaufbahn um die Erde gebracht zu werden, aufweisend:
- ein kombiniertes Bildgebungs- und Laserkommunikationssystem, das einem der vorstehenden Ansprüche entspricht und das an einem Rahmen (101) des Satelliten (100) so angebracht ist, dass die Visierrichtung (DP) des Teleskops (10) bezüglich des Rahmens fest ist;
- Orientierungseinrichtungen zum Orientieren des Satelliten (11); und
- ein System zur Höhen- und Bahnsteuerung (12), das konfiguriert ist, die Orientierungseinrichtungen des Satelliten (11) zu steuern, um eine Emissionsrichtung (DE) der Lasersendesignale in eine Zielrichtung zu bringen, so dass das kombinierte Bildgebungs- und Laserkommunikationssystem anschließend die Lasersendesignale gemäß der Zielrichtung emittiert,
wobei der Satellit (100) ferner aufweist:
- eine Geolokalisationseinrichtung (14), die konfiguriert ist, Geolokalisationssignale zu empfangen und auf Basis der empfangenen Geolokalisationssignale eine Position des Satelliten (100) zu berechnen; und
- ein Modul (13), das konfiguriert ist, als Funktion der Position des Satelliten (100), wie von der Geolokalisationseinrichtung (14) berechnet, und als Funktion der Koordinaten des satellitenexternen Laserkommunikationsempfängers die Zielrichtung zu berechnen, so dass die Zielrichtung von dem Satelliten zu dem Laserkommunikationsempfänger zeigt.

10. Satellit nach Anspruch 9, in welchem die Geolokalisationseinrichtung (14) eine GPS-Einrichtung ist.

11. Satellit (100) nach Anspruch 9 oder 10, in welchem eine Genauigkeit der Geolokalisationseinrichtung (14) zur Berechnung der Position des Satelliten und eine Genauigkeit der Orientierungseinrichtungen des Satelliten (11) eingerichtet sind, so dass die von dem Satelliten aus emittierten Lasersendesignale von dem systemexternen Laserkommunikationsempfänger (R) empfangen werden, indem die Emissionsrichtung (DE) der Lasersendesignale bezüglich des Teleskops (10) fest beibehalten wird.

12. Satellit (100) nach Anspruch 11, ohne einen Zielerfassungs- und Zielverfolgungsdetektor, der auf Basis von externen Lasersignalen arbeitet, die von dem systemexternen Laserkommunikationsempfänger (R) emittiert werden, und in welchem die Genauigkeit der Geolokalisationseinrichtung (14) zur Berechnung der Position des Satelliten und die Genauigkeit der Orientierungseinrichtungen des Satelliten (11) eingerichtet sind, so dass die von dem Satelliten aus emittierten Lasersendesignale von dem satellitenexternen Laserkommunikationsempfänger empfangen werden, wenn die Orientierungseinrichtungen des Satelliten gesteuert werden, um die Emissionsrichtung (DE) der Lasersendesignale gemäß der Zielrichtung zu orientieren.

13. Verfahren zur Laserkommunikation, das an Bord eines Satelliten (100) durchgeführt wird, der in einer Umlaufbahn um die Erde ist und einem der Ansprüche 9 bis 12 entspricht, wobei das Verfahren die folgenden Schritte aufweist:
/1/ Empfangen von Geolokalisationssignalen, dann Berechnen einer Position des Satelliten auf Basis der empfangenen Geolokalisationssignale;
/2/ auf Basis der in Schritt /1/ berechneten Position des Satelliten (100) und auf Basis von Koordinaten des satellitenexternen Laserkommunikationsempfängers (R), Berechnen der Zielrichtung für Lasersendesignale, die von dem Satelliten aus hin zu dem Laserkommunikationsempfänger zu emittieren sind; dann
/3/ Orientieren des Satelliten (100) gemäß der berechneten Zielrichtung, dann Aktivieren der Laserstrahlungsquelle (6), um die Lasersendesignale hin zu dem Laserkommunikationsempfänger (R) zu emittieren,
gemäß welchem der Schritt /1/ mehrere Male während einer Umkreisung des Satelliten (100) auf der Umlaufbahn ausgeführt wird und die Schritte /2/ und /3/ unter Verwendung der Position des Satelliten, wie sie bei der letzten Ausführung des Schritts /1/ berechnet worden ist, ausgeführt werden.

14. Verfahren nach Anspruch 13, gemäß welchem eine Umlaufbahnhöhe des Satelliten (100) kleiner als 2000km ist, und der Laserkommunikationsempfänger (R) sich auf der Erdoberfläche oder an Bord eines anderen Erdsatelliten, der eine andere Umlaufbahnhöhe hat, die ebenfalls kleiner als 2000km ist, oder an Bord eines anderen Satelliten, der in der geostationären Umlaufbahn ist, befindet.

## Claims

1. Combined system for imaging and communication by laser signals, comprising:
- a telescope (10), comprising at least a primary mirror (1) and a secondary mirror (2), and adapted for forming, in a focal plane (PF) of said telescope, an image of a scene located in a pointing direction (DP) of the telescope, by reflection of radiation received from the scene at least on the primary mirror then on the secondary mirror; and
- an image sensor (5) arranged in the focal plane (PF) of the telescope (10), and able to capture the image of the scene; and
- a source of laser radiation (6), adapted for producing laser transmission signals,
**characterized in that** said combined system for imaging and communication by laser signals is adapted for being affixed onto a frame of a satellite, so that the pointing direction of the telescope is fixed with respect to the frame,
and **in that** the source of laser radiation (6) is arranged so that the laser radiation which constitutes the laser transmission signals is reflected at least by the secondary mirror (2) then by the primary mirror (1), to be emitted towards a laser communication receiver (R) external to the system.

2. System according to claim 1, wherein the telescope (10) further comprises a tertiary mirror (3) and is adapted for forming the image of the scene in the focal plane (PF) of said telescope by reflection of the radiation received from said scene, successively on the primary mirror (1), then the secondary mirror (2), then the tertiary mirror.

3. System according to claim 2, arranged so that the laser radiation which constitutes the laser transmission signals is reflected by the secondary mirror (2) then by the primary mirror (1) without being reflected by the tertiary mirror (3), for emission towards the laser communication receiver (R) external to the system, said laser radiation which constitutes the laser transmission signals being introduced into an intermediate focal plane (PI) of the telescope (10) which is effective for radiation reflected by the primary and secondary mirrors but not the tertiary mirror.

4. System according to claim 2, arranged so that the laser radiation which constitutes the laser transmission signals is successively reflected by the tertiary mirror (3), then by the secondary mirror (2), then by the primary mirror (1), for emission towards the laser communication receiver (R) external to the system, and so that said laser radiation which constitutes the laser transmission signals is brought into the focal plane (PF) of the telescope (10) at a location of said focal plane of the telescope that is distanced from the image sensor (5).

5. System according to claim 2, further comprising a focal plane duplication element (7) which is arranged to create an image of the focal plane (PF) of the telescope (10), called the secondary focal plane (PS),
and the system being arranged so that the laser radiation which constitutes the laser transmission signals is brought to the secondary focal plane (PS) at a location of said secondary focal plane which is optically superimposed on the image sensor (5) by the focal plane duplication element (7), and so that the laser radiation of the laser transmission signals, produced by the source of laser radiation (6), is directed by said focal plane duplication element toward the tertiary mirror (3), then successively reflected by said tertiary mirror, then by the secondary mirror (2), then by the primary mirror (1), in order to be emitted towards the communication receiver (R) external to said system.

6. System according to claim 5, wherein the focal plane duplication element (7) comprises a mirror or a dichroic plate, arranged to reflect one among the laser radiation of the laser transmission signals and the radiation received from the scene, and to transmit without reflection by said mirror or said dichroic plate, the other one among said laser radiation of the laser transmission signals and said radiation received from the scene.

7. System according to any one of the preceding claims, further comprising a path for receiving external laser communication signals, said reception path comprising a reception detector and being arranged so that the radiation of said external signals emitted by the laser communication receiver (R) external to said system, is reflected by at least the primary mirror (1) then by the secondary mirror (2) before reaching the reception detector.

8. System according to claim 7, arranged so that the laser radiation of the laser transmission signals emitted by said system, and the radiation of the external signals emitted by the laser communication receiver (R) external to said system, which reaches the reception detector, follow identical optical paths within the telescope (10) while traveling in opposite directions of propagation.

9. Satellite (100) intended for placement in orbit around the Earth, comprising:
- a combined system for imaging and communication by laser signals according to any one of the preceding claims, and which is fixed on a frame (101) of the satellite (100) so that the pointing direction (DP) of the telescope (10) is fixed relative to the frame;
- satellite orientation means (11); and
- an attitude and orbit control system (12), adapted for controlling the satellite orientation means (11) in order to bring a direction of emission (DE) of the laser transmission signals to a target direction, so that the combined system for imaging and communication by laser signals then emits the laser transmission signals in the target direction,
the satellite (100) further comprising:
- a geolocation device (14) adapted for receiving geolocation signals and to calculate a position of the satellite (100) based on the geolocation signals received; and
- a module (13) adapted for calculating the target direction based on the position of the satellite (100) as calculated by the geolocation device (14) and based on coordinates of the laser communication receiver (R) external to the satellite, so that the target direction points from the satellite towards the laser communication receiver.

10. Satellite (100) according to claim 9, wherein the geolocation device (14) is a GPS device.

11. Satellite (100) according to claim 9 or 10, wherein an accuracy of the geolocation device (14) for calculating the satellite position, and an accuracy of the satellite orientation means (11) are adapted so that the laser transmission signals emitted from the satellite are received by the laser communication receiver (R) external to said satellite while the direction of emission (DE) of the laser transmission signals is kept fixed with respect to the telescope (10).

12. Satellite (100) according to claim 11, devoid of any target acquisition and tracking detector operating based on external laser signals emitted by the laser communication receiver (R) external to the satellite, and wherein the accuracy of the geolocation device (14) for calculating the satellite position and the accuracy of the satellite orientation means (11) are adapted so that the laser transmission signals emitted from the satellite are received by the laser communication receiver external to said satellite, when the satellite orientation means are controlled to orient the direction of emission (DE) of the laser transmission signals to the target direction.

13. Method for communication by laser signals, implemented on board a satellite (100) in orbit around the Earth and in accordance with any one of claims 9 to 12, the method comprising the following steps:
/1/ receiving geolocation signals, then calculating a position of the satellite from the geolocation signals received;
/2/ from the position of the satellite (100) calculated in step /1/, and from the coordinates of the laser communication receiver (R) external to said satellite, calculating the target direction for laser transmission signals to be emitted from the satellite towards the laser communication receiver; then
/3/ orienting the satellite (100) in accordance with the calculated target direction, then activating the source of laser radiation (6) in order to emit the laser transmission signals towards the laser communication receiver (R),
wherein step /1/ is executed multiple times during one revolution of the satellite (100) in its orbit, and steps /2/ and /3/ are executed using the satellite position as calculated in the latest execution of step /1/.

14. Method according to claim 13, wherein an orbit altitude of the satellite (100) is less than 2000 km, and the laser communication receiver (R) is located on the Earth's surface or on board another Earth satellite having a different orbit altitude that is also less than 2000 km, or on another satellite which is in geostationary orbit.
